# FASCICULE DE BREVET EUROPEEN

(11) **EP 3 755 141 B1**
(45) Date de publication et mention de la délivrance du brevet: **30.03.2022**
(21) Numéro de dépôt: 19712259.1
(22) Date de dépôt: 20.02.2019
(51) Int. Cl.: A01K 1/01, A01K 1/015

(54) **REVÊTEMENT DE SOL, EN PARTICULIER POUR LE SOL D'UNE ENCEINTE POUR L'ÉLEVAGE D'ANIMAUX**
BODENABDECKUNG, INSBESONDERE FÜR DEN BODEN EINES TIERHALTUNGSGEBÄUDES
FLOOR COVERING, IN PARTICULAR FOR THE FLOOR OF A LIVESTOCK BUILDING

(30) Priorité: 20.02.2018 FR 1851440
(43) Date de publication de la demande: 30.12.2020
(73) Titulaire: Bioret Agri-Logette Confort, 44390 Nort sur Erdre (FR)
(72) Inventeur: BIORET, Jean-Vincent, 44390 PETIT MARS (FR)
(74) Mandataire: Jacobacci Coralis Harle
(86) Numéro de dépôt international: PCT/FR2019/050387
(87) Numéro de publication internationale: WO 2019/162614

(56) Documents cités:
- AT-B- 301 137
- NL-C- 1 039 330
- US-A- 4 184 303
- US-A- 5 351 458
- US-A- 5 486 392

## Description

### DOMAINE TECHNIQUE AUQUEL SE RAPPORTE L'INVENTION

La présente invention concerne, de manière générale, le domaine des revêtements de sol, en particulier pour le sol d'une enceinte pour l'élevage d'animaux (par exemple de bovins).

Elle concerne en particulier les revêtements de sol adaptés à l'aménagement des couloirs de circulation d'une telle enceinte d'élevage.

### ARRIERE-PLAN TECHNOLOGIQUE

Le confort des animaux constitue un paramètre déterminant dans le rendement d'un élevage, qui influence notamment la santé, la prise alimentaire, la fertilité et la longévité des animaux.

Ce confort des animaux est régi en particulier par des obligations légales qui sont définies dans les Traités d'Amsterdam (1999) et de Lisbonne (2009) relatifs au Protocole sur la protection et le bien-être des animaux, ainsi que par l'adoption de la seconde stratégie européenne pour le bien-être animal.

En étable, ce confort implique notamment une évacuation rapide et efficace des déjections générées par les animaux.

Cette gestion des déjections doit en effet permettre de réduire les émanations de gaz et la prolifération de bactéries dans l'enceinte d'élevage, et par conséquent d'améliorer les conditions d'ambiance et les performances sanitaires.

Ces déjections sont en plus susceptibles de rendre le sol glissant, avec les risques de chute et de blessure qui en découlent.

Plusieurs systèmes d'évacuation des déjections coexistent à ce jour : les systèmes d'évacuation mécanique, les systèmes de « châsse d'eau » et les systèmes de caillebotis.

Dans le cadre d'une solution par « évacuation mécanique », les déjections présentes sur le sol sont raclées une à plusieurs fois par jour par un dispositif de raclage dénommé rabot (manoeuvré par un tracteur ou par des moyens automatiques), pour être amenées jusqu'à une fosse de collecte située hors du bâtiment d'élevage.

Toutefois, la séparation des urines et des fèces n'est pas optimale au sein d'un tel système d'évacuation, constituant ainsi une source importante d'ammoniac. De plus, l'installation d'un tel système d'évacuation implique des travaux de gros oeuvre importants, qui sont difficiles à envisager dans une enceinte d'élevage existante.

Avec une « chasse d'eau », un liquide de chasse évacue énergiquement les déjections dans un caniveau puis vers une fosse extérieure.

Or, là encore, la séparation des urines et des fèces n'est pas optimale au sein d'un tel système d'évacuation, constituant encore une source importante d'ammoniac. De plus, la mise en œuvre d'un tel système conduit à une humidification importante des sols de l'enceinte d'élevage, susceptible de générer des problèmes d'adhérence et d'hygiène.

Plus généralement, un revêtement de sol excessivement humide est susceptible de provoquer des problèmes sanitaires au niveau des pieds des animaux, notamment de boiteries, constituant un trouble majeur de santé en élevage.

Parmi les infections à l'origine de boiteries, la dermatite digitée, encore appelée « maladie de Mortellaro », est la plus problématique.

Il existe par conséquent un besoin de solutions techniques permettant une réduction de l'humidité des surfaces d'appui sur le sol des enceintes d'élevage avec une évacuation efficace des liquides (en particulier des urines), avantageusement cela sans nécessiter des travaux de gros oeuvre importants, de sorte à améliorer les conditions d'adhérence et les conditions sanitaires des animaux.

Il existe également un intérêt pour des solutions simples qui permettent éventuellement une certaine séparation des urines et des fèces, de manière à limiter la production d'ammoniac dans les enceintes d'élevage.

Les documents US4184303A, US5351458A, US5486392A et AT301137B font partie de l'état de l'art.

### OBJET DE L'INVENTION

Dans ce contexte, la demanderesse a développé une nouvelle structure de revêtement de sol visant à améliorer les conditions d'hygiène dans une enceinte d'élevage, notamment par une gestion optimale des liquides.

Le revêtement de sol selon l'invention comprend pour cela des longerons qui sont réalisés dans au moins un matériau élastique et qui sont destinés à être juxtaposés pour former une surface d'appui.

Les longerons comportent chacun un ensemble de faces :
- deux faces frontales, l'une destinée à reposer sur une surface de réception et l'autre destinée à former une portion d'appui de ladite surface d'appui, et
- deux faces latérales, dont l'une au moins est destinée à venir en regard de la face latérale d'un longeron juxtaposé.

Selon l'invention, les longerons comportent des logements adaptés à coopérer avec des entretoises qui sont rapportées pour stabiliser les longerons juxtaposés dans un écartement fixe.

Les entretoises comportent chacune :
- des parties de fixation, adaptées à se loger dans lesdits logements de deux longerons juxtaposés, et
- une partie de liaison, reliant les parties de fixation.

Et les parties de fixation desdites entretoises et les logements de deux longerons juxtaposés sont agencés pour préserver un espace, avantageusement une rainure s'ouvrant vers le haut, entre les faces latérales des longerons juxtaposés.

À cet effet, l'écartement desdites parties de fixation est supérieur à l'écartement des logements de deux longerons accolés, pour préserver un espace, avantageusement une rainure s'ouvrant vers le haut, entre les faces latérales des longerons juxtaposés.

Le revêtement de sol selon l'invention, destiné à équiper une enceinte pour l'élevage d'animaux, est adapté à former une surface d'appui sur laquelle les animaux sont destinés à prendre appui ; et cette surface d'appui est destinée à être divisée en une pluralité de portions d'appui (formées chacune par un longeron) qui sont séparées les unes des autres par des rainures (espace entre deux longerons juxtaposés) destinées à recevoir les liquides s'écoulant sur ledit revêtement.

Une telle structure permet une évacuation automatique et continue des liquides depuis lesdites portions d'appui, jusqu'auxdites rainures.

Les surfaces d'appui du revêtement de sol restent ainsi en permanence relativement peu humide, participant ainsi à améliorer les caractéristiques qualitatives du sol sur le plan de l'adhérence et de l'hygiène.

Cette structure permet également une séparation rapide et relativement efficace des urines par rapport aux fèces, pour limiter la production d'ammoniac au sein de l'enceinte d'élevage.

Un tel revêtement de sol selon l'invention est en plus adapté à être implanté de manière simple au sein d'une enceinte d'élevage nouvelle ou existante (amélioration ou rénovation), cela sans nécessiter la mise en œuvre de travaux de gros oeuvre importants.

L'environnement moins humide permet aussi à l'onglon des bovins d'être plus dur, ce qui fait partie de la santé du pied de ces animaux et qui contribue à diminuer les risques de glissades des animaux.

Selon un mode de réalisation préféré, les logements sont ménagés sur au moins une première desdites faces frontales desdits longerons, et s'étendent chacune le long desdites faces latérales desdits longerons.

Des caractéristiques non limitatives et avantageuses de ce mode de réalisation, prises individuellement ou selon toutes les combinaisons techniquement possibles, sont les suivantes :
- l'un au moins des longerons comprend au moins deux gorges longitudinales formant lesdits logements ; les gorges longitudinales présentent avantageusement les cotes suivantes :
   une largeur comprise entre 2 et 10 mm, et une profondeur comprise entre 8 et 28 mm ;
- ledit au moins un longeron comporte au moins une lèvre latérale qui, d'une part, délimite ladite au moins une gorge et, d'autre part, forme la face latérale dudit longeron ; laquelle lèvre latérale comporte une bordure libre déportée par rapport à ladite première face frontale, du côté de la seconde face frontale, par exemple d'une distance comprise entre 1 mm et 5 mm ; laquelle lèvre latérale comporte par exemple une épaisseur comprise entre 5 et 20 mm.

Selon l'invention, les entretoises consistent en des pièces qui sont réalisés par exemple en matériau plastique.

Les entretoises ont selon l'invention une section en U, avec :
- deux volets extérieurs formant les parties de fixation, avantageusement pourvus de nervures d'accrochage, et
- un volet de fond formant la partie de liaison.

L'un au moins des profilés comporte deux volets intérieurs, à distance l'un de l'autre et des volets extérieurs ; lesquels volets intérieurs sont avantageusement destinés à prendre chacun appui sur une face latérale d'un longeron associé.

Les volets intérieurs et la bande centrale du volet de fond (entre les deux volets intérieurs) sont continus. Ces volets forment ainsi une structure étanche au liquide, apte à servir de rigole pour la collecte et le cheminement des liquides.

Les volets intérieurs sont avantageusement reliés par un volet transversal, en regard et à distance du volet de fond. Ce volet transversal est avantageusement continu, ou discontinu pour former au moins une lumière.

De manière alternative, le volet de fond comporte au moins un segment incliné dont la pente est orientée dans le sens de la longueur de l'entretoise.

De manière générale, les longerons possèdent avantageusement les cotes suivantes :
- une largeur comprise entre 150 et 400 mm, et
- une hauteur comprise entre 15 et 40 mm.

L'invention propose également un système pour la collecte des déjections s'écoulant sur le sol d'une enceinte pour l'élevage d'animaux, par exemple de bovins, lequel système comprend :
- un revêtement de sol selon l'invention, et
- des moyens pour convoyer les déjections au sein desdites rainures, de manière à générer une circulation desdites déjections le long desdites rainures et en direction de moyens de collecte.

L'invention propose encore une enceinte d'élevage équipée d'un revêtement de sol selon l'invention, voire d'un système pour la collecte des déjections selon l'invention.

L'enceinte d'élevage comporte avantageusement un couloir de circulation comportant un axe longitudinal et recouvert par un revêtement de sol. Les longerons dudit revêtement de sol sont agencés parallèlement, ou au moins approximativement parallèlement, par rapport audit axe longitudinal.

Les longerons sont posés avec la première desdites faces frontales reposant sur la surface de réception, de sorte que les longerons sont rapportés sur les entretoises.

La présente invention concerne encore le longeron pour un revêtement de sol, en particulier pour le sol d'une enceinte pour l'élevage d'animaux (par exemple de bovins).

Ledit longeron est réalisé dans au moins un matériau élastique et destiné à être juxtaposé avec un autre longeron pour former une surface d'appui.

Ce longeron comporte un ensemble de faces :
- deux faces frontales, l'une destinée à reposer sur une surface de réception et l'autre destinée à former une portion d'appui de ladite surface d'appui, et
- deux faces latérales, dont l'une au moins est destinée à venir en regard de la face latérale d'un longeron juxtaposé.

Lequel longeron comporte des logements adaptés à coopérer avec des entretoises qui sont rapportées pour stabiliser les longerons juxtaposés dans un écartement fixe.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue partielle, et en perspective, du revêtement de sol selon l'invention ;
- la figure 2 est une vue en coupe et partielle du revêtement de sol selon la figure 1, avec un plan de coupe orienté verticalement et transversalement ;
- la figure 3 est une vue partielle et agrandie du revêtement de sol selon la figure 2, montrant plus en détails la section verticale d'une entretoise du type profilé comportant deux volets intérieurs reliés par un volet transversal muni d'au moins une lumière longitudinale ;
- la figure 4 est une vue partielle et agrandie d'un autre revêtement de sol selon l'invention, montrant plus en détails la section verticale d'une entretoise du type profilé comportant deux volets intérieurs qui sont dépourvus du volet transversal ;
- la figure 5 est une vue partielle et agrandie d'un autre revêtement de sol, montrant en détails la section verticale d'une entretoise du type profilé comportant deux volets intérieurs reliés par un volet transversal continu qui est orienté vers le haut ;
- la figure 6 est une vue partielle et agrandie d'un autre revêtement de sol, montrant en détails la section verticale d'une entretoise du type profilé comportant deux volets intérieurs reliés par un volet transversal continu qui est orienté vers le bas ;
- la figure 7 est une vue en coupe et partielle d'un revêtement de sol selon l'invention, avec un plan de coupe orienté verticalement et transversalement, dont l'entretoise comporte un volet de fond diédrique ;
- la figure 8 est une vue en coupe du revêtement selon la figure 7, selon un plan de coupe longitudinal agencé le long de l'entretoise ;
- la figure 9 représente, de manière isolée et agrandie, le détail IX de la figure 8 qui montre une partie du volet de fond (l'arête à partir de laquelle s'étendent les deux segments inclinés) ;
- la figure 10 représente, de manière isolée et agrandie, le détail X de la figure 8 qui illustre l'extrémité inférieure de l'un des segments inclinés.

### Revêtement de sol

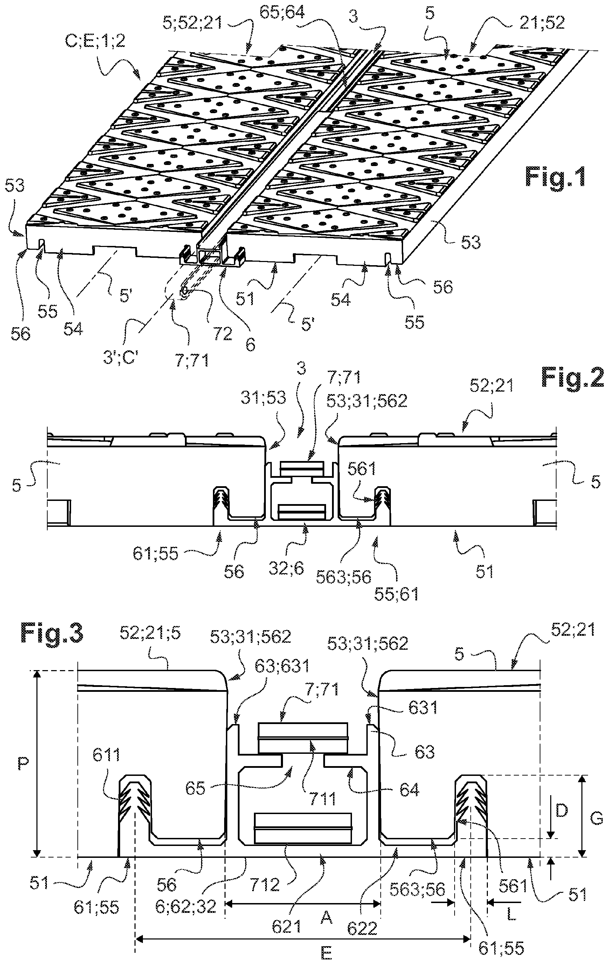

Le revêtement de sol 1 selon l'invention, représenté schématiquement et partiellement sur la figure 1, est tout particulièrement adapté à équiper le sol d'une enceinte E pour l'élevage d'animaux.

Par « animaux », on entend notamment les bovins (en particulier les vaches laitières ou les bovins à viande), les porcins, ou encore tout autre animal d'élevage (ovin, volaille, lapin, cheval, etc.).

Une telle enceinte d'élevage (non représentée) consiste en un bâtiment délimité par un bâti, adapté à l'élevage souhaité (par exemple une étable dans le cas de bovins).

Une partie au moins du sol de cette enceinte d'élevage E est recouvert par le revêtement de sol 1 selon l'invention.

En particulier, le revêtement de sol 1 est avantageusement implanté au niveau des couloirs de circulation C qui sont empruntés par les animaux cheminant entre les différents espaces fonctionnels de l'enceinte d'élevage E (par exemple logettes, salles de traite, etc.).

Et ce revêtement de sol 1 est apte à collecter les liquides s'écoulant sur le sol et à les évacuer, de sorte à offrir une surface d'appui relativement sèche (ou au moins ne présentant pas une humidité excessive) pour les pieds des animaux, et donc plus saine.

Pour cela, tel qu'illustré sur la figure 1, ce revêtement de sol 1 comprend une surface d'appui 2 sur laquelle les animaux sont destinés à prendre appui et qui est divisée en une pluralité de portions d'appui 21 séparées, les unes des autres, par des rainures 3.

Les portions d'appui 21 de la surface d'appui 2 s'étendent entre deux rainures 3, et avantageusement dans un même plan, ou au moins approximativement dans un même plan.

L'espace entre deux portions d'appui 21 forme l'une de ces rainures 3 s'ouvrant vers le haut.

Les rainures 3 constituent ainsi des structures de genre rigoles ou gouttières s'ouvrant vers le haut, au travers de la surface d'appui 2.

Ces rainures 3 sont aptes à collecter (par gravité), voire à contenir, les liquides s'écoulant sur le revêtement de sol 1, de sorte que ces liquides stagnent le moins possible sur les portions d'appui 21.

Par « liquides », on entend en particulier les déjections liquides produites par les animaux de l'élevage, en particulier leur urine.

De manière générale, comme décrit ci-dessous en relation avec les figures 2 et 3, chaque rainure 3 est délimitée par deux faces latérales 31 raccordées par une face de fond 32.

Ces rainures 3 ont avantageusement des dimensions particulières pour permettre une collecte efficace des liquides, tout évitant de constituer une gêne pour le cheminement des animaux.

A cet égard, comme illustré sur la figure 3, chaque rainure 3 peut être définie par deux dimensions : une largeur A (distance séparant ses deux faces latérales 31 en regard) et une profondeur P (distance maximale séparant sa face de fond 32 et les portions d'appui 21 attenantes).

En l'espèce, les rainures 3 ont avantageusement chacune :
- une largeur A d'au maximum 50 mm, de préférence comprise entre 15 et 50 mm, et
- une profondeur P d'au minimum de 15 mm, avantageusement comprise entre 15 et 50 mm.

Les rainures 3 sont avantageusement régulièrement espacées, les unes par rapport aux autres, sur le revêtement de sol 1.

En d'autres termes, ces rainures 3 sont avantageusement régulièrement réparties sur le revêtement de sol 1.

Pour cela, le revêtement de sol 1 comprend ici :
- des longerons 5, destinés à être juxtaposés pour former les portions d'appui 21 de la surface d'appui 2, et
- des entretoises 6 rapportées pour stabiliser les longerons 5 juxtaposés dans un écartement / espacement fixe (avec un espace déterminé), de sorte à définir les rainures 3 entre les longerons 5 juxtaposés (autrement dit, les longerons 5 ne sont pas accolés ou pas attenants).

### Longerons

Les longerons 5 peuvent consister en des poutres, comme représenté sur les figures 1 à 6. De manière alternative, ces longerons 5 peuvent encore consister en des pièces en forme de tapis.

Les longerons 5 sont réalisés dans au moins un matériau élastique, avantageusement adapté à subir une déformation en enfoncement, cela d'au moins 1 mm, et de préférence comprise entre 1 et 5 mm, lors de l'appui du pied de l'animal ou d'une personne.

Par « enfoncement », on entend en particulier une diminution de l'épaisseur du longeron 5.

Pour cela, ledit au moins un matériau apte à subir une déformation élastique est choisi parmi :
- les matériaux élastomères, à savoir par exemple le caoutchouc naturel, le caoutchouc « naturel synthétique » (ou polyisoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Ces longerons peuvent être réalisés mono-matériau ou multi-matériaux.

Plus précisément, ces longerons 5 ont avantageusement une forme générale parallélépipédique. Ils comportent ainsi chacun un ensemble de faces longitudinales (figures 1 et 2) :
- deux faces frontales 51, 52, l'une inférieure et l'autre supérieure,
- deux faces latérales 53, longitudinales, avantageusement parallèles l'une par rapport à l'autre, et
- deux faces d'extrémité 54, transversales, avantageusement parallèles l'une par rapport à l'autre.

Les faces frontales 51, 52 consistent avantageusement en :
- une première face frontale 51, inférieure, destinée à reposer sur une surface de réception (par exemple une chape en béton ou un caillebotis), et
- une seconde face frontale 52, supérieure, destinée à former l'une des portions d'appui 21 de la surface d'appui 2.

La seconde face frontale 52, supérieure, consiste de préférence en une surface plane horizontale ou une surface courbe convexe.

Pour une adhérence optimale, la seconde face frontale 52 est avantageusement munie de reliefs antidérapants.

Le relief antidérapant consiste par exemple en un relief monobloc choisi parmi les reliefs utilisés dans les revêtements de sols mis en oeuvre de manière classique dans les bâtiments d'élevage, par exemple des éléments saillants en forme de losanges munis de bossages.

La seconde face frontale 52 comporte encore avantageusement une couche d'un matériau abrasif, afin de permettre et/ou de favoriser l'usure des sabots et la santé du pied des animaux.

Pour obtenir cette couche de matériau abrasif, le matériau abrasif est avantageusement mélangé avec le matériau constitutif du longeron 5.

Le matériau abrasif consiste par exemple en des particules de quartz, de métal ou de toute autre matière ayant un pouvoir abrasif sur l'onglon des vaches.

Ce matériau abrasif est rapporté avant, pendant ou après la fabrication du longeron 5.

Les faces latérales 53, verticales, sont quant à elles destinées à venir en regard de la face latérale 53 d'un longeron juxtaposé 5.

Les longerons 5 possèdent avantageusement les cotes suivantes :
- une largeur (distance entre les faces latérales 53) comprise entre 100 et 500 mm, de préférence entre 150 et 400 mm, et
- une hauteur (distance entre les faces frontales 51, 52) comprise entre 15 et 40 mm.

Selon l'invention, les longerons 5 comportent des logements 55 adaptés à coopérer avec les entretoises 6 qui sont rapportées pour stabiliser les longerons 5 juxtaposés dans un écartement fixe.

Les logements 55 sont ménagés ici sur la première face frontale 51 des longerons 5. Ces logements 55 s'ouvrent ainsi du côté de cette première face frontale 51.

Ces logements 55 s'étendent avantageusement chacun le long (à proximité) des faces latérales 53 des longerons 5.

En l'espèce, chaque longeron 5 comprend au moins deux gorges longitudinales 55 formant lesdits logements, s'étendent chacune le long de l'une de ses deux faces latérales 53.

En d'autres termes, chaque face latérale 53 du longeron 5 est bordée par au moins une gorge longitudinale 55 (une gorge longitudinale continue ou une gorge longitudinale discontinue) formant un logement.

Les gorges longitudinales 55 présentent avantageusement les cotes suivantes (figure 3) :
- une largeur L comprise entre 2 et 10 mm (distance mesurée parallèlement aux faces frontales 51, 52), et
- une profondeur G comprise entre 8 et 28 mm (distance mesurée parallèlement aux faces latérales 53).

Ce longeron 5 comporte ici deux lèvres latérales 56 qui, d'une part, délimite une gorge 55 précitée et, d'autre part, forme l'une des faces latérales 53 de ce longeron 5.

Pour cela, cette lèvre latérale 56 comporte les faces suivantes :
- une face latérale intérieure 561, délimitant la gorge 55,
- une face latérale extérieure 562, formant l'une des faces latérales 53 du longeron 5, et
- une bordure libre 563, s'étendant du côté de la première face frontale 51 (inférieure).

L'épaisseur de la lèvre latérale 56 correspond à la distance entre ses deux faces latérales 561, 562. Cette épaisseur est par exemple comprise entre 5 et 20 mm.

La bordure libre 563 est déportée par rapport à la première face frontale 51 (inférieure), cela du côté de la seconde face frontale 52 (supérieure). Ce déport est utile pour tenir compte du positionnement et de l'encombrement des entretoises 6.

Le déport de cette bordure libre 563, par rapport à la première face frontale 51 (inférieure), est par exemple compris entre 1 mm et 15 mm.

De manière générale, les longerons 5, avant leur pose, peuvent avantageusement être stockés à plat ou sous forme de rouleaux.

Cette dernière forme de réalisation en rouleaux a l'intérêt de permettre une pose simple et rapide des longerons 5 dans l'enceinte d'élevage par déroulement ; elle permet aussi d'assurer une continuité optimale des rainures 3 pour la récupération efficace des liquides aux extrémités de ces dernières.

### Entretoises

Le revêtement de sol 1 comporte encore les entretoises 6, décrites en détails ci-dessous en relation notamment avec la figure 3.

Chaque entretoise 6 comporte :
- des parties de fixation 61, adaptées à se loger dans les logements 55 de deux longerons 5 juxtaposés, et
- une partie de liaison 62, reliant ces parties de fixation 61.

Les parties de fixation 61 sont espacées d'un écartement E qui est défini ici par la partie de liaison 62.

Les parties de fixation 61 des entretoises 6 et les logements 55 de deux longerons 5 juxtaposés sont agencés pour préserver un espace 3, avantageusement une rainure 3 s'ouvrant vers le haut, entre les faces latérales 53 des longerons 5 juxtaposés.

A cet effet, l'écartement E des parties de fixation 61 est supérieur à l'écartement des logements 55 de deux longerons 5 accolés (configuration non représentée), pour préserver un espace / un écartement (formant une rainure 3) entre les faces latérales 53 des longerons 5 juxtaposés.

Par « longerons 5 accolés », on entend deux longerons 5 dont les faces latérales 53 en regard seraient en appui (dit encore au contact) l'une sur l'autre.

L'espace « intercalaire », maintenu entre les faces latérales 53 de deux longerons 5 juxtaposés, forme une rainure 3 destinée à recevoir les liquides s'écoulant sur la surface d'appui 2.

En l'espèce, les entretoises 6 consistent ici en des pièces (désignées par le même repère 6) qui sont réalisées par exemple en matériau plastique. Dans la présente description, les termes « entretoise », « pièce » et « profilé » sont utilisés indifféremment.

Les entretoises 6 sont par exemple réalisées dans un matériau choisi parmi acrylonitrile butadiène styrène (ABS), polyéthylène (PE), polyamide (PA), polypropylène (PP), polychlorure de vinyle (PVC) ou tout autre matériau plastique mélangé (y compris les matériaux plastiques recyclés).

Ces entretoises 6 peuvent être fabriquées par une technique d'extrusion ou par une technique d'injection plastique.

De manière générale, les profilés 6 ont une section en U, avec :
- deux volets extérieurs 61 (verticaux), formant les parties de fixation 61, et
- un volet de fond 62 (horizontal), formant la partie de liaison 62 et formant ici une face de fond d'une rainure 3.

Les volets extérieurs 61 s'étendent avantageusement, d'une part, parallèlement l'un par rapport à l'autre et, d'autre part, à l'équerre par rapport au volet de fond 62.

Les volets extérieurs 61 sont avantageusement pourvus de nervures d'accrochage 611, pour favoriser l'accrochage de ces volets extérieurs 61 au sein des logements 55.

Ces nervures d'accrochage 611 sont orientées pour favoriser l'enfoncement tout en augmentant la force de séparation / d'extraction.

Le profilé 6 comporte encore ici deux volets intérieurs 63 qui sont avantageusement destinés à prendre chacun appui sur une face latérale 53 d'un longeron 5 associé.

Les deux volets intérieurs 63 forment, avec les faces latérales 53 attenantes, les deux faces latérales 31 d'une rainure 3.

Les deux volets intérieurs 63 s'étendent depuis le volet de fond 62, entre les deux volets extérieurs 61.

Les volets intérieurs 63 s'étendent à distance l'un de l'autre et des volets extérieurs 61.

Ces volets intérieurs 63 s'étendent encore avantageusement, d'une part, parallèlement l'un par rapport à l'autre et par rapport aux volets extérieurs 61, et d'autre part, à l'équerre par rapport au volet de fond 62.

Les volets intérieurs 63 et la bande centrale 621 du volet de fond 62 (entre les deux volets intérieurs 63) sont continus. Ces volets 62, 63 forment ainsi une structure étanche au liquide, apte à servir de rigole pour la collecte et le cheminement des liquides.

Par ailleurs, l'écartement entre les deux volets intérieurs 63 correspond avantageusement, au moins approximativement, à la largeur A de la rainure 3.

De même, un volet intérieur 63 et le volet extérieur 61 en regard forment, avec une bande latérale 622 du volet de fond 62, une gorge en U s'ouvrant à l'opposée du volet de fond 62 pour recevoir (au jeu près) une lèvre latérale 56 précitée.

Pour assurer une étanchéité et un maintien améliorés, l'écartement entre un volet intérieur 63 et le volet extérieur 61 en regard correspond avantageusement à l'épaisseur de la lèvre latérale 56 précitée (distance entre ses deux faces latérales 561, 562).

Encore par ailleurs, les volets intérieurs 63 ont avantageusement une hauteur supérieure par rapport aux volets extérieurs 61.

A ce sujet, les volets extérieurs 61 ont par exemple une hauteur inférieure, ou égale, à la profondeur des gorges longitudinales 55. Les volets intérieurs 63 ont quant à eux une hauteur inférieure, ou égale, à la hauteur des longerons 5 ; en particulier, les volets intérieurs 63 ont avantageusement une hauteur allant de une hauteur minimal correspondant à la moitié de la hauteur des longerons 5, jusqu'à une hauteur maximale correspondant à la hauteur des longerons 5.

En outre, comme illustré sur les figures 1 à 3, les volets intérieurs 63 peuvent porter un volet transversal 64, en regard et à distance du volet de fond 62 (et en particulier de sa bande centrale 621).

En l'espèce, ce volet transversal 64 est localisé entre le volet de fond 62 et l'extrémité libre 631 des volets intérieurs 63 (figure 3).

Le profilé 6 comporte ainsi une chambre longitudinale délimitée par la bande centrale 621 de la paroi de fond 62, par les deux volets intérieurs 63 et par le volet transversal 64.

Le volet transversal 64 peut être discontinu, pour former au moins une lumière 65, traversante et allongée.

Le volet transversal 64 peut ainsi comporte une lumière continue ou une lumière discontinue (plusieurs lumières successives).

Un tel mode de réalisation est intéressant pour optimiser la séparation des déchets :
- les déchets solides éventuels vont rester au-dessus de ce volet transversal 64, et
- les déchets liquides vont traverser ladite au moins une lumière 65, de sorte à venir entre le volet transversal 64 et le volet de fond 62.

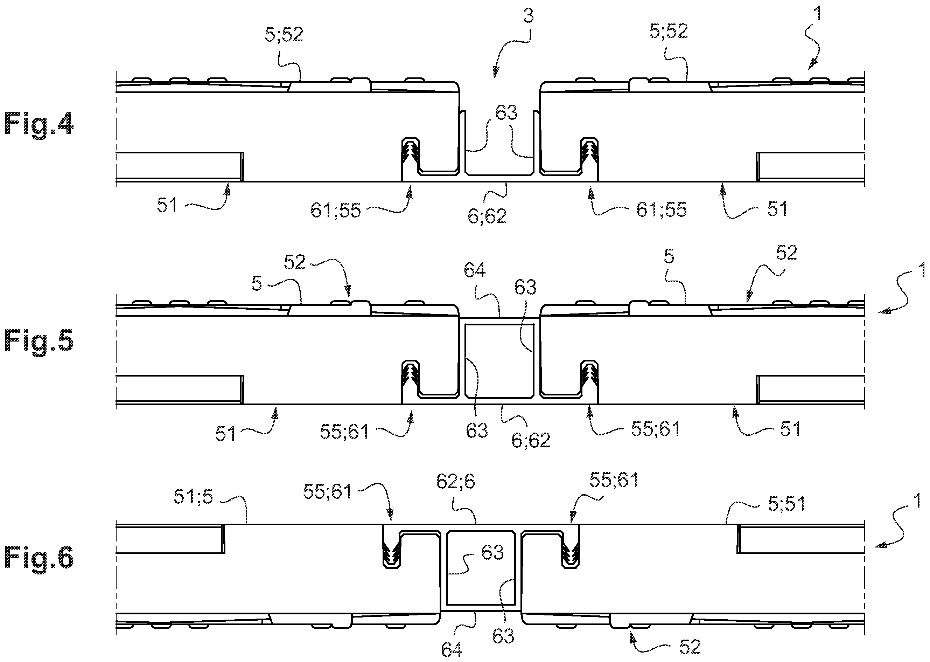

Comme illustré sur la figure 4, le profilé 6 comporte les volets extérieurs 61 et les volets intérieurs 63 qui sont portés par le volet de fond 62.

Ce profilé 6 est en revanche dépourvu du volet transversal 64. Les volets intérieurs 63 forment ainsi, avec une bande centrale 621 du volet de fond 62, une gorge correspondant à la rainure 3 destinée à recevoir les liquides.

Selon une variante de réalisation illustré sur les figures 5 et 6, les volets intérieurs 63 portent par un volet transversal 64, en regard et à distance du volet de fond 62.

Les volets intérieurs 63 ont avantageusement une hauteur égale à la hauteur des longerons 5.

Le volet transversal 64 est continu. Il s'étend avantageusement dans le plan, ou au moins approximativement dans le plan, d'une face frontale 51, 52 opposée.

Encore de manière alternative, le profilé 6 comporte uniquement le volet de fond 62 portant les volets extérieurs 61 (sans les volets intérieurs 63).

### Système de collecte

Selon un mode de réalisation représenté sur les figures 1 à 3, le revêtement de sol 1 peut équiper un système pour la collecte des déjections s'écoulant sur le sol d'une enceinte pour l'élevage d'animaux.

Dans ce contexte, ce système comprend avantageusement :
- un revêtement de sol 1 selon l'invention (tel que décrit sur les figures 1 à 4), et
- des moyens 7 pour convoyer les déjections au sein des rainures 3, de manière à générer une circulation des déjections le long desdites rainures 3 et en direction de moyens de collecte (non représentés).

Les moyens de collecte comprennent en particulier une fosse (ou un canal de reprise), installée au niveau d'au moins une extrémité ouverte des rainures 3 du revêtement de sol 1.

Ces moyens de collecte peuvent encore comporter des conduits pour l'évacuation des liquides.

Les conduits débouchent, d'un côté amont, dans les rainures 3 et, d'un côté aval, en regard des orifices d'un caillebotis.

De manière à générer une circulation optimale des déjections liquides en direction de ces moyens de collecte (et éventuellement des déjections solides), le système de collecte selon l'invention comprend encore les moyens 7 pour convoyer les liquides (et éventuellement des déjections solides) le long des rainures 3 du revêtement de sol 1.

En l'espèce, ces moyens de convoyage 7 comprennent pour cela des organes d'entrainement 71 qui sont rapportés dans les rainures 3 et qui sont accouplés avec des moyens de manoeuvre 72 (figure 1) pour leur appliquer un mouvement destiné à provoquer le déplacement des déjections dans un sens adapté au sein de ces rainures 3.

Les organes d'entrainement 71 consistent avantageusement en des bandes ou courroies, sans fin, qui sont rapportées dans et le long des rainures 3 et des profilés 6.

Ces organes d'entrainement 71 sont représentés partiellement et schématiquement sur les figures 1 à 3 dans un souci de simplification. Toutefois, en pratique, ces organes d'entrainement 71 sont avantageusement destinés à s'étendre sur toute la longueur des profilés 6 associés.

Ces organes d'entrainement 71 comportent avantageusement des surfaces de convoyage formant des sortes de rabots ou de racleurs, aptes à pousser/repousser/tirer les déjections présentes au sein des profilés 6 associés.

De préférence, ces organes d'entrainement 71 sont réalisés monoblocs, dans un matériau élastomère, à savoir par exemple le caoutchouc naturel, le caoutchouc « naturel synthétique » (ou polyisoprène synthétique), le polybutadiène ou le styrène - butadiène.

Ce matériau des organes d'entrainement 71 participe à limiter les frottements avec les profilés 6.

Les moyens de manoeuvre 72 assurent une manoeuvre en translation des organes d'entraînement 71 au sein de leurs profilés 6 respectifs, de sorte à générer une circulation des déjections au sein de ces profilés 6 associés.

Lors de cette manoeuvre en translation, les forces de frottement sont avantageusement réduites notamment du fait des propriétés des profilés 6.

Par exemple, les moyens de manoeuvre 72 comprennent avantageusement un ensemble de poulies coopérant avec les organes d'entraînement 71.

Selon un mode de réalisation représenté sur les figures 1 à 3, les poulies 72 sont agencées de sorte que les organes d'entrainement 71 forment un aller-retour au sein d'une seule et même rainure 3 et de son profilé 6 associé.

Dans ce mode de réalisation, l'organe d'entrainement 71 comporte avantageusement deux brins actifs superposés dans le profilé 6 (figure 3) :
- un brin supérieur 711 cheminant au-dessus du volet transversal 64, formant une partie supérieure apte à servir de support aux déjections solides tout en autorisant l'écoulement des déjections liquides, et
- un brin inférieur 712 cheminant au-dessous du volet transversal 64, formant une partie inférieure apte à convoyer les déjections liquides s'écoulant depuis ladite partie supérieure 711.

Une telle forme de réalisation vise à favoriser une évacuation, d'une part, des déjections solides au niveau d'une première extrémité de la rainure 3 et, d'autre part, des déjections liquides au niveau d'une seconde extrémité de la rainure 3.

Selon un autre mode de réalisation, les poulies 72 sont agencées de sorte que les organes d'entrainement 71 forment un ensemble d'aller-retour au sein des profilés 6 successifs, pour présenter une forme générale de S (vue de dessus).

Dans les différents modes de réalisation, l'une au moins des poulies 72 est motorisée pour assurer le cheminement des organes d'entrainement 71.

La vitesse de cheminement est par exemple comprise entre 1 et 10 m/min, notamment suivant la concentration en animaux au m² et le type de déjection.

Deux brins actifs 71 successifs cheminent ainsi dans des sens inverses l'un par rapport à l'autre.

### Enceinte d'élevage

En pratique, tel que représenté sur les figures 1 à 5, les longerons 5 sont posés avec la première face frontale 51 reposant sur la surface de réception.

Les longerons 5 sont rapportés sur les entretoises 6 qui sont également posés du côté de la surface de réception.

En particulier, les parties de fixation 61 des entretoises 6 sont logées par emboîtement dans les logements 55 dédiés des longerons 5. Le cas échéant, le volet de fond 62 des profilés 6 prend appui sur le sol, dans le prolongement des premières faces frontales 51 des longerons 5.

De manière générale, les longerons 5 et les entretoises 6 du type profilé sont avantageusement posés en quinconce : les profilés 6 raccordent les longerons 5 posés en série, bord à bord.

Les longerons 5 sont alors stabilisés par les entretoises 6, de sorte que les rainures 3 s'ouvrent vers le haut pour recevoir les liquides par gravité.

Ces rainures 3 sont avantageusement rectilignes et s'étendent parallèlement les unes par rapport aux autres.

Chaque rainure 3 comporte ainsi un axe longitudinal 3', s'étendant parallèlement à ses faces latérales 31 ; les axes longitudinaux 3' des différentes rainures 3 s'étendent parallèlement les uns aux autres.

De préférence, les rainures 3 sont réparties sur la largeur du revêtement de sol 1 ; et ces rainures 3 s'étendent sur toute la longueur du revêtement de sol 1.

Les rainures 3 délimitent ainsi entre elles une pluralité de portions d'appui 21 qui ont chacune la forme d'une bande rectiligne.

Chaque longeron 5 comporte un axe longitudinal 5', s'étendant parallèlement à l'axe longitudinal 3' des rainures 3 et à l'axe longitudinal 5' des autres longerons 5.

De préférence encore, l'enceinte d'élevage E comporte un couloir de circulation C comportant un axe longitudinal C' et recouvert par le revêtement de sol 1.

Et les longerons 5 de ce revêtement de sol 1 sont agencés parallèlement, ou au moins approximativement parallèlement, par rapport à cet axe longitudinal C' du couloir de circulation C.

Cette orientation est en particulier utile pour favoriser l'évacuation des liquides contenus dans les rainures 3 jusqu'aux moyens de collecte équipant l'enceinte d'élevage et qui sont implantés à l'extrémité des couloirs de circulation C.

En fonctionnement, le revêtement de sol 1 est susceptible de recevoir différentes matières organiques, notamment des déjections (urine, fèces).

Le revêtement de sol 1 permet alors un écoulement des liquides entre les longerons 5, jusqu'aux rainures 3, évitant ainsi l'accumulation de ces liquides sur les longerons 5 qui restent ainsi relativement secs.

Les matières solides, notamment les fèces, restent principalement sur les longerons 5, de sorte à éviter leur mélange et à limiter la production d'ammoniac au sein de l'enceinte d'élevage.

Ces matières solides sont avantageusement évacuées par raclage des longerons 5, au moyen d'un système de raclage éventuellement choisi parmi les systèmes habituels.

Lors d'un nettoyage de ce revêtement de sol 1, le liquide de nettoyage va également s'écouler dans ces rainures 3, évitant que les longerons 5 restent mouillés de manière excessive.

Ce phénomène permet par conséquent aux animaux de cheminer sur une surface d'appui 2 relativement saine, avec un risque de chute réduit et sans humidification de leurs pieds.

De manière générale, le revêtement de sol 1 selon l'invention permet ainsi une évacuation rapide et en continu des liquides par rapport à la surface d'appui 2, ce qui permet un maintien efficace de cette dernière à l'état sec (ou au moins sans excès d'humidité), limitant ainsi les problèmes d'hygiène rencontrés avec les revêtements de sol habituels.

Le revêtement de sol 1 selon l'invention permet également une certaine séparation des liquides qui s'écoulent dans les rainures 3, par rapport aux fèces qui restent principalement sur longerons 5, de sorte à éviter leur mélange et à limiter la production d'ammoniac au sein de l'enceinte d'élevage.

### Variante de réalisation

Selon encore une variante de réalisation illustrée sur la figure 5, le revêtement de sol 1 comporte un profilé 6 qui est muni d'un volet transversal 64 continu.

Ce volet transversal 64 s'étend avantageusement dans le plan, ou au moins approximativement dans le plan, de la seconde face frontale 52.

Le revêtement de sol 1 comportera alors une surface d'appui 2 continue.

Selon une variante de pose illustrée sur la figure 6, la première face frontale 51 munie des logements 55 est orientée vers le haut.

Les entretoises 6 sont alors rapportées sur les longerons 5, de sorte que leurs volets de fond 62 forment une partie de la surface d'appui 2 entre deux longerons 5.

Le volet transversal 64 s'étend avantageusement dans le plan, ou au moins approximativement dans le plan, de la seconde face frontale 52 (ici inférieure).

Là encore, le revêtement de sol 1 comportera une surface d'appui 2 continue.

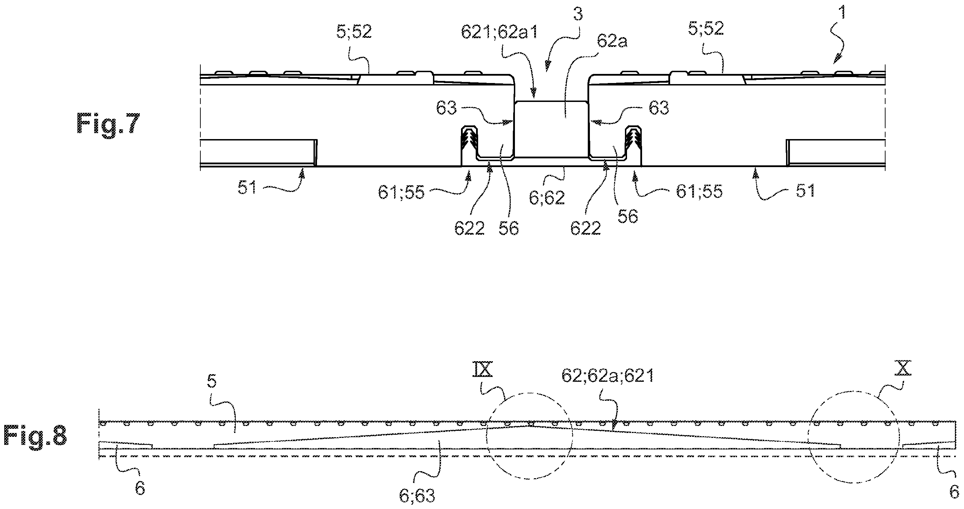

Selon encore une variante de réalisation illustrée sur les figures 7 à 10, le revêtement de sol 1 comporte une entretoise 6 présentant une section en U, avec :
- deux volets extérieurs 61 (verticaux), formant les parties de fixation 61, et
- un volet de fond 62 incliné (en particulier une bande centrale 621 inclinée), formant la partie de liaison 62 et formant la face de fond d'une rainure 3.

Là encore, les volets extérieurs 61 sont avantageusement pourvus de nervures d'accrochage 611, pour favoriser l'accrochage de ces volets extérieurs 61 au sein des logements 55.

Le volet de fond 62 comporte quant à lui au moins un segment incliné 62a, avantageusement au niveau de la bande centrale 621 et intercalé entre les bandes latérales 622.

Par « segment incliné », on entend en particulier une portion de surface qui est avantageusement plane et qui est destinée à former une pente par rapport à l'horizontal et avantageusement par rapport aux bandes latérales 622 (avantageusement destinée à venir en appui sur le sol, à l'horizontal).

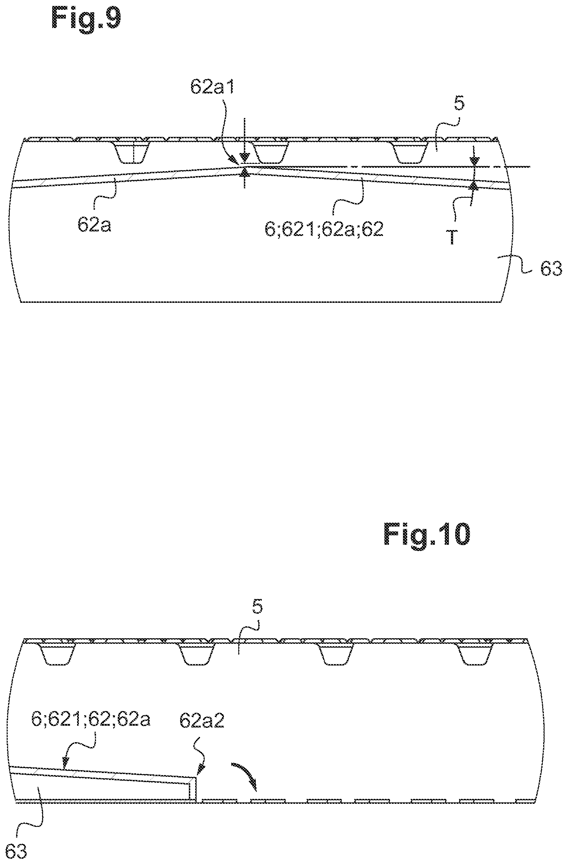

Chaque segment incliné 62a comporte ainsi une pente descendante délimitée par deux extrémités, à savoir une pente s'étendant depuis une extrémité supérieure 62a1 (figure 9) jusqu'à une extrémité inférieure 62a2 (figure 10).

En d'autres termes, chaque segment incliné 62a est agencé de sorte que :
- son extrémité supérieure 62a1 se situe à distance de la première face frontale 51, inférieure, et à distance des bandes latérales 622, et
- l'extrémité inférieure 62a2 se situe à proximité de cette même première face frontale 51, inférieure, et à proximité de ces bandes latérales 622.

Encore en d'autres termes, la pente descendante est orientée longitudinalement, dans le sens de la longueur de l'entretoise 6.

L'extrémité inférieure 62a1 du segment incliné 62a débouche (se termine) au niveau de l'une des extrémités de l'entretoise 6.

Un tel segment incliné 62a est ainsi destiné à assurer un écoulement des liquides dans un sens orienté depuis son extrémité supérieure 62a1 vers son extrémité inférieure 62a2, jusqu'à son écoulement au niveau de cette extrémité inférieure 62a2 (comme illustré par la flèche F représentée sur la figure 10).

Un espace est alors préservé entre deux entretoises 6 successives pour former une lumière autorisant l'écoulement des liquides (figure 8)

En l'espèce, le volet de fond 62 comporte deux segments inclinés 62a, définissant ensemble une forme générale diédrique.

Ce volet de fond 62 comporte deux segments inclinés 62a qui s'étendent de manière divergente l'un par rapport à l'autre depuis une extrémité supérieure 62a1 commune.

De même, les segments inclinés 62a comportent les dimensions suivantes, seules ou en combinaison :
- les segments inclinés 62a possèdent ensemble une longueur allant de 0,3 et 2 m, correspondant encore à la longueur de l'entretoise 6,
- la longueur de chaque segment incliné 62a correspond à la moitié de la longueur précitée, respectivement de 0,15 à 1m.

Les lumières entre deux entretoises 6 ont avantageusement une longueur comprise entre 50 et 500mm.

En outre, les segments inclinés 62a présentent avantageusement une pente T allant de 2% à 7% (figure 9).

Les segments inclinés 62a sont encore terminés latéralement par les deux volets intérieurs 63 qui sont avantageusement destinés à prendre chacun appui sur une face latérale 53 d'un longeron 5 associé.

Chaque volet intérieur 63 est ainsi raccordé, d'une part, à la bande centrale 621, au niveau de sa bordure supérieure et, d'autre part, à la bande latérale 622, au niveau de sa bordure inférieure.

En d'autres termes, là encore, un volet intérieur 63 et le volet extérieur 61 en regard forment, avec une bande latérale 622 du volet de fond 62, une gorge en U pour recevoir (au jeu près) une lèvre latérale 56 précitée.

Ainsi, pour assurer une étanchéité et un maintien améliorés, l'écartement entre un volet intérieur 63 et le volet extérieur 61 en regard correspond avantageusement à l'épaisseur de la lèvre latérale 56 précitée (distance entre ses deux faces latérales 561, 562).

Une telle entretoise 6 selon les figures 7 à 10 est avantageusement réalisée par un procédé de moulage par injection (dit encore « injection plastique »).

En pratique, dans ce mode de réalisation selon les figures 7 à 10 et au sein des rainures 3, les liquides vont cheminer le long des segments inclinés 62a, dans le sens de la pente, de sorte à être conduits jusqu'aux lumières entre deux entretoises 6.

Les liquides vont alors pouvoir circuler par gravité jusqu'au, et au travers, du sol S formé le cas échéant par un plancher ajouré de caillebotis.

Les matières solides, notamment les fèces, restent principalement sur les longerons 5, de sorte à éviter leur mélange avec les liquides et à limiter la production d'ammoniac au sein de l'enceinte d'élevage.

Encore selon une variante non représentée, les entretoises 6 sont choisies avec un écartement E des parties de fixation 61 qui est identique à l'écartement des logements 55 de deux longerons 5 dont les faces latérales 53 sont accolées.

Le revêtement de sol 1 comporterait alors des longerons 5 qui sont accolés (les faces latérales 53 en appui l'une sur l'autre) pour former une surface d'appui 2 continue.

## Revendications

1. Revêtement de sol, en particulier pour le sol d'une enceinte pour l'élevage d'animaux (par exemple de bovins),
lequel revêtement de sol comprend des longerons (5) qui sont réalisés dans au moins un matériau élastique et qui sont destinés à être juxtaposés pour former une surface d'appui (2),
lesquels longerons (5) ont une forme générale parallélépipédique et comportent chacun un ensemble de faces :
- deux faces frontales (51, 52), l'une (51) destinée à reposer sur une surface de réception du sol et l'autre (52) destinée à former une portion d'appui (21) de ladite surface d'appui (2), et
- deux faces latérales (53), dont l'une au moins est destinée à venir en regard de la face latérale (53) d'un longeron (5) juxtaposé,
lesquels longerons (5) comportent des logements (55) adaptés à coopérer avec des entretoises (6) qui sont rapportées pour stabiliser les longerons (5) juxtaposés dans un écartement fixe, et
lequel revêtement de sol (1) comporte lesdites entretoises (6) qui comportent chacune :
- des parties de fixation (61), adaptées à se loger dans lesdits logements (55) de deux longerons (5) juxtaposés, et
- une partie de liaison (62), reliant les parties de fixation (61),
lesquelles parties de fixation (61) desdites entretoises (6) et lesquels logements (55) de deux longerons (5) juxtaposés sont agencés pour préserver un espace (3), avantageusement une rainure (3) s'ouvrant vers le haut, entre les faces latérales (53) des longerons (5) juxtaposés,
lesquelles entretoises (6) consistent en des pièces, réalisées par exemple en matériau plastique,
lesquelles entretoises (6) ont une section en U, avec :
- deux volets extérieurs (61) formant les parties de fixation (61), avantageusement pourvus de nervures d'accrochage (611), et
- un volet de fond (62) formant la partie de liaison (62).
**caractérisé en ce que** l'une au moins des entretoises (6) comporte deux volets intérieurs (63), à distance l'un de l'autre et des volets extérieurs (61),
lesquels volets intérieurs (63) sont avantageusement destinés à prendre chacun appui sur une face latérale (53) d'un longeron (5) associé,
lesquels volets intérieurs (63) et laquelle bande centrale (621) du volet de fond (62) sont continus, de sorte que lesdits volets (62, 63) forment une structure étanche au liquide, apte à servir de rigole pour la collecte et le cheminement des liquides.

2. Revêtement de sol selon la revendication 1, **caractérisé en ce que** les volets intérieurs (63) sont reliés par un volet transversal (64), en regard et à distance du volet de fond (62),
lequel volet transversal (64) est avantageusement continu, ou discontinu pour former au moins une lumière (65).

3. Revêtement de sol selon l'une quelconque des revendications 1 ou 2, **caractérisé en ce que** lesdits logements (55) sont ménagés sur au moins une première desdites faces frontales (51) desdits longerons (5), et s'étendent chacune le long desdites faces latérales (53) desdits longerons (5).

4. Revêtement de sol selon la revendication 3, **caractérisé en ce que** l'un au moins des longerons (5) comprend au moins deux gorges longitudinales (55) formant lesdits logements (55).

5. Revêtement de sol selon la revendication 4, **caractérisé en ce que** ledit au moins un longeron (5) comporte au moins une lèvre latérale (56) qui, d'une part, délimite ladite au moins une gorge longitudinale (55) et, d'autre part, forme la face latérale (53) dudit longeron (5),
laquelle lèvre latérale (56) comporte une bordure libre (563) déportée par rapport à ladite première face frontale (51), du côté de la seconde face frontale (52).

6. Revêtement de sol selon l'une quelconque des revendications 1 à 5, **caractérisé en ce que** le volet de fond (62) comporte au moins un segment incliné (62a) dont la pente est orientée dans le sens de la longueur de l'entretoise (6).

7. Système pour la collecte des déjections s'écoulant sur le sol d'une enceinte pour l'élevage d'animaux, par exemple de bovins, lequel système est **caractérisé en ce qu'**il comprend :
- un revêtement de sol (1) selon l'une quelconque des revendications 1 à 6, et
- des moyens (7) pour convoyer les déjections au sein des rainures (3) du revêtement de sol (1), de manière à générer une circulation desdites déjections le long desdites rainures (3) et en direction de moyens de collecte.

8. Enceinte d'élevage équipée d'un revêtement de sol (1) selon l'une quelconque des revendications 1 à 6, voire d'un système pour la collecte des déjections (1, 7) selon la revendication 7.

9. Enceinte d'élevage selon la revendication 8, en combinaison avec la revendication 3, **caractérisée en ce que** les longerons (5) sont posés avec la première (51) desdites faces frontales (51, 52) reposant sur la surface de réception, de sorte que les longerons (5) sont rapportés sur les entretoises (6) pour préserver des rainures (3) entre les faces latérales (53) des longerons (5) juxtaposés.

## Patentansprüche

1. Bodenabdeckung, insbesondere für den Boden eines Gebäudes für die Haltung von Tieren (zum Beispiel von Rindern),
wobei die Bodenabdeckung Längsbalken (5) aufweist, die aus wenigstens einem elastischen Material gefertigt sind und die dazu bestimmt sind, nebeneinander angeordnet zu werden, um eine Autlagefläche (2) zu bilden,
wobei die Längsbalken (5) eine im Wesentlichen rechteckige Form haben und jeweils eine Gesamtheit von Seiten aufweisen:
- zwei Frontseiten (51, 52), von denen eine (51) dazu bestimmt ist, auf einer aufnehmenden Oberfläche des Bodens aufzuliegen, und die andere (52) dazu bestimmt ist, einen Auflageabschnitt (21) der Auflagefläche (2) zu bilden, und
- zwei Seitenflächen (53), von denen wenigstens eine dazu bestimmt ist, der Seitenfläche (53) eines daneben liegenden Längsbalkens (5) gegenüberzuliegen,
wobei die Längsbalken (5) Aufnahmen (55) aufweisen, die dazu ausgelegt sind, mit Zwischenstücken (6) zusammenzuwirken, die eingefügt sind, um die nebeneinander liegenden Längsbalken (5) in einem festen Abstand zueinander zu halten, und wobei die Bodenabdeckung (1) die Zwischenstücke (6) aufweist, von denen jedes
- Befestigungsteile (61), die dazu ausgelegt sind, in den Aufnahmen (55) zweier nebeneinander liegender Längsbalken (5) untergebracht zu werden, und
- einen Verbindungsteil (62), der die beiden Befestigungsteile miteinander verbindet,
aufweist,
wobei die Befestigungsteile (61) der Zwischenstücke (6) und die Aufnahmen (55) zweier nebeneinander liegender Längsbalken (5) so ausgelegt sind, daß sie zwischen den Seitenflächen (53) der nebeneinander liegenden Längsbalken (5) einen Raum (3), vorzugsweise eine nach oben offene Rinne (3), bewahren,
wobei die Zwischenstücke (6) aus beispielsweise aus Plastikmaterial gefertigten Stücken bestehen,
wobei die Zwischenstücke (6) einen U-förmigen Querschnitt mit
- zwei äußeren Schenkeln (61), die die vorzugsweise mit Verhakungsrippen (611) versehenen Befestigungsteile (61) bilden, und
- einem den Verbindungsteil (62) bildenden Bodenteil (62) aufweisen,
**dadurch gekennzeichnet, daß** wenigstens eins der Zwischenstücke (6) zwei voneinander beabstandete und von den äußeren Schenkeln (61) beabstandete innere Schenkel (63) aufweist,
wobei die inneren Schenkel (63) vorteilhafterweise dazu bestimmt sind, an einer Seitenfläche (53) eines zugehörigen Längsbalkens (5) anzuliegen,
wobei die inneren Schenkel (63) und das zentrale Band (621) des Bodenteils (62) durchgehend sind, so daß die Schenkel und das Band (62, 63) eine flüssigkeitsdichte Struktur bilden, die geeignet ist, als Abflußrinne zum Sammeln und Abführen von Flüssigkeiten zu dienen.

2. Bodenabdeckung gemäß Anspruch 1, **dadurch gekennzeichnet, daß** die inneren Schenkel (63) durch ein dem Bodenteil (62) gegenüberliegendes und von diesem beabstandetes Querteil (64) verbunden sind,
wobei das Querteil (64) vorteilhafterweise durchgehend oder zur Bildung wenigstens eines Lochs (65) nicht durchgehend ist.

3. Bodenabdeckung gemäß einem der Ansprüche 1 oder 2, **dadurch gekennzeichnet, daß** die Aufnahmen (55) auf wenigstens einer ersten der Frontseiten (51) der Längsbalken (5) angeordnet sind und sich jeweils entlang der Seitenflächen (53) der Längsbalken (5) erstrecken.

4. Bodenabdeckung gemäß Anspruch 3, **dadurch gekennzeichnet, daß** wenigstens einer der Längsbalken (5) wenigstens zwei Längsrillen (55) aufweist, die die Aufnahmen (55) bilden.

5. Bodenabdeckung gemäß Anspruch 4, **dadurch gekennzeichnet, daß** der wenigstens eine Längsbalken (5) wenigstens eine seitliche Lippe (56) aufweist, die einerseits die wenigstens eine Längsrille (55) begrenzt und andererseits die Seitenfläche (53) des Längsbalkens (5) bildet,
wobei die seitliche Lippe (56) einen gegenüber der ersten Frontseite (51) in Richtung der zweiten Frontseite (52) versetzten freien Rand (563) aufweist.

6. Bodenabdeckung gemäß einem der Ansprüche 1 bis 5, **dadurch gekennzeichnet, daß** das Bodenteil (62) wenigstens einen geneigten Abschnitt (62a) aufweist, dessen Neigung in der Längsrichtung des Zwischenstücks (6) verläuft.

7. System zum Sammeln von sich am Boden eines Gebäudes für die Haltung von Tieren, zum Beispiel von Rindern, ergießenden Ausscheidungen, wobei das System **dadurch gekennzeichnet ist, daß** es
- eine Bodenabdeckung (1) gemäß einem der Ansprüche 1 bis 6 und
- Mittel (7) zum Transportieren der Ausscheidungen innerhalb der Rinnen (3) der Bodenabdeckung (1), so daß eine Bewegung der Ausscheidungen entlang der Rinnen (3) in Richtung von Mitteln zum Sammeln geschaffen wird,
aufweist.

8. Tierhaltungsgebäude, das mit einer Bodenabdeckung (1) gemäß einem der Ansprüche 1 bis 6 oder einem System (1, 7) zum Sammeln von Ausscheidungen gemäß Anspruch 7 ausgestattet ist.

9. Tierhaltungsgebäude gemäß Anspruch 8 kombiniert mit Anspruch 3, **dadurch gekennzeichnet, daß** die Längsbalken (5) mit der ersten (51) der Frontseiten (51, 52) auf der aufnehmenden Oberfläche verlegt sind, so daß die Längsbalken (5) auf die Zwischenstücke (6) aufgebracht sind, um Rinnen (3) zwischen den Seitenflächen (53) der nebeneinander liegenden Längsbalken (5) zu bewahren.

## Claims

1. Flooring, in particular for the ground of an enclosure for livestock (for example, cattle),
said flooring comprising stringers (5) that are made of at least one elastic material and that are intended to be juxtaposed in order to form a bearing surface (2),
said stringers (5) having a generally parallelepipedal shape and each having a set of faces:
- two front faces (51, 52), one (51) intended to rest on a receiving surface and the other (52) intended to form a bearing portion (21) of said bearing surface (2), and
- two lateral faces (53), at least one of which is intended to come opposite the lateral face (53) of a juxtaposed stringer (5),
wherein said stringers (5) include recesses (55) adapted to cooperate with spacers (6) that are added to stabilize the juxtaposed stringers (5) with a fixed spacing, and
in that said flooring (1) includes said spacers (6), which each include:
- attachment portions (61), adapted to enter said recesses (55) of two juxtaposed stringers (5), and
- a link portion (62), connecting the attachment portions (61),
and in that the attachment portions (61) of said spacers (6) and the recesses (55) of two juxtaposed stringers (5) are arranged so as to maintain a space (3), advantageously a groove (3) opening upward, between the lateral faces (53) of the juxtaposed stringers (5),
wherein the spacers (6) consist of parts, that are made, for example, of plastic material,
wherein the spacers (6) have a U-shaped cross-section, with:
- two outer flaps (61) forming the attachment portions (61), advantageously provided with hooking ribs (611), and
- a bottom flap (62) forming the link portion (62),
**characterized in that** at least one of the spacers (6) includes two inner flaps (63), remote from each other, and outer flaps (61),
said inner flaps (63) being each advantageously intended to bear on a lateral face (53) of an associated stringer (5),
wherein the inner flaps (63) and the central strip (621) of the bottom flap (62) are continuous in order that these flaps (62, 63) hence form a liquid-tight structure, adapted to serve as a trough for the collection and the travel of the liquids.

2. Flooring according to claim 1, **characterized in that** the inner flaps (63) are connected by a transverse flap (64), opposite and remote from the bottom flap (62),
said transverse flap (64) being advantageously continuous, or discontinuous, to form at least one aperture (65).

3. Flooring according to any one of the claims 1 or 2, **characterized in that** said recesses (55) are formed on at least a first one of said front faces (51) of said stringers (5), and each extend along said lateral faces (53) of said stringers (5),

4. Flooring according to claim 3, **characterized in that** at least one of the stringers (5) comprises at least two longitudinal channels (55) forming said recesses (55).

5. Flooring according to claim 4, **characterized in that** said at least one stringer (5) includes at least one lateral lip (56) that, on the one hand, delimits said at least one longitudinal channel (55) and, on the other hand, forms the lateral face (53) of said stringer (5),
said lateral lip (56) including a free edge (563) offset with respect to said first front face (55), on the side of the second front face (52).

6. Flooring according to any one of claims 1 to 5, **characterized in that** the bottom flap (62) includes at least one inclined segment (62a), whose slope is in the direction of the spacer (6) length.

7. System for collecting excreta flowing on the ground of an enclosure for livestock, for example cattle, said system being **characterized in that** it comprises:
- a flooring (1) according to any one of claims 1 to 6, and
- means (7) for conveying the excreta within the grooves (3) of the flooring (1), so as to generate a circulation of said excreta along said grooves (3) and toward collection means.

8. Livestock enclosure equipped with a flooring (1) according to any one of claims 1 to 6, or even a system for collecting excreta (1, 7) according to claim 7.

9. Livestock enclosure according to claim 8, in combination with claim 3, **characterized in that** the stringers (5) are installed with the first one (51) of said front faces (51, 52) resting on the receiving surface, so that the stringers (5) are placed on the spacers (6) to maintain grooves (3) between the lateral faces (53) of the juxtaposed stringers (5).
